(19) Europäisches Patentamt / European Patent Office / Office européen des brevets

(11) **EP 3 629 622 B1**

(12) **EUROPEAN PATENT SPECIFICATION**

(45) Date of publication and mention of the grant of the patent:
**15.11.2023 Bulletin 2023/46**

(21) Application number: **18819709.9**

(22) Date of filing: **20.03.2018**

(51) International Patent Classification (IPC):
**H04L 1/00** *(2006.01)* **H04L 5/00** *(2006.01)*

(52) Cooperative Patent Classification (CPC):
**H04L 5/0073; H04L 1/0002; H04L 1/0009; H04L 1/0015;** H04L 5/0085

(86) International application number:
**PCT/JP2018/010936**

(87) International publication number:
**WO 2018/235363 (27.12.2018 Gazette 2018/52)**

(54) **WIRELESS COMMUNICATION DEVICE, COMMUNICATION SYSTEM, AND COMMUNICATION METHOD**

FUNKKOMMUNIKATIONSVORRICHTUNG, FUNKKOMMUNIKATIONSSYSTEM UND FUNKKOMMUNIKATIONSVERFAHREN

DISPOSITIF DE RADIOCOMMUNICATION, SYSTÈME DE COMMUNICATION ET PROCÉDÉ DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.06.2017 JP 2017120056**

(43) Date of publication of application:
**01.04.2020 Bulletin 2020/14**

(73) Proprietor: **Sony Group Corporation Tokyo 108-0075 (JP)**

(72) Inventors:
• **MA, Yuelin**
  **Tokyo 108-0075 (JP)**
• **MORIOKA, Yuichi**
  **Tokyo 108-0075 (JP)**

(74) Representative: **D Young & Co LLP**
**120 Holborn**
**London EC1N 2DY (GB)**

(56) References cited:
WO-A1-2016/048098    WO-A1-2016/048098
JP-A- 2013 509 794    US-A1- 2012 207 097

**Description**

[Technical Field]

The present technique relates to a wireless communication device, a communication system, and a communication method. More specifically, the present technique relates to a wireless communication device, a communication system, and a communication method with which an interference signal that interferes with a wireless signal is detected as defined in the appended claims.

[Background Art]

In recent years, wireless LANs (Local Area Networks) have been widely used. Thus, the number of wireless communication devices provided in ranges where radio waves interfere with each other is increasing. For this reason, in communication systems, suppression of throughput deterioration caused by radio-wave interferences has been demanded. In order to address this demand, introduction of an SR (Spatial Reuse) technology has been considered in the IEEE (Institute of Electrical and Electronic Engineers) 802.11ax standard. The SR technology is for enhancing the usage efficiency of a medium by starting transmission of a wireless signal when the signal intensity of an interference signal is equal to or less than a threshold even in a case where a wireless communication device has detected the interference signal transmitted from the outside of a network to which the wireless communication device belongs. This can improve the usage efficiency of a medium, and thereby improving the throughput in a wireless communication system.

Besides introduction of the SR technology, control of an MCS (Modulation and Coding Scheme) can lead to improvement of the throughput. For example, a wireless communication device has been proposed which measures an SINR (Signal to Interference plus Noise Ratio), and sets an MCS on the basis of the measured value (for example, see PLT 1). The wireless communication device starts transmission of a wireless signal modulated and coded by the set MCS.

[Citation List]

[Patent Literature]

[PTL 1]
US 2012/207097 A1 discloses a method and an apparatus for improving the efficiency of data transmission in a multiuser wireless transmission system.
Japanese Patent Laid-Open No. 2016-195409

[Summary]

Various aspects and features of the invention are defined in the appended claims.

[Technical Problem]

In the aforementioned wireless communication device, the MCS is set on the basis of the SINR, so that the resistance against radio-wave interferences is increased. Thus, throughput deterioration can be suppressed. However, when the SR technology is imported to the wireless communication device, suppression of throughput deterioration may become insufficient. In the SR technology, even when detecting an interference signal, the wireless communication device starts transmission of a wireless signal if the signal intensity of the interference signal is equal to or less than a threshold. However, the interference power of the interference signal may change during transmission of the wireless signal. When the SINR reaches a value different from that at the starting time of the transmission due to a change of the interference power, the MCS set on the basis of the SINR at the starting time of the transmission becomes an inappropriate value, so that the resistance against radio-wave interferences is deteriorated. As a result of this, the influence of a radio-wave interference becomes larger, so that the throughput is deteriorated. In addition, communication becomes unstable due to the radio-wave interference. As described so far, there has been a problem that radio-wave interferences cause troubles such as throughput deterioration.

The present technique has been made in view of the aforementioned circumstances, and an object thereof is to suppress any trouble caused by radio-wave interferences in a communication system in which wireless signals are transmitted and received.

[Solution to Problem]

The present technique has been made in order to solve the aforementioned problem, and a first aspect thereof is a wireless communication device and a communication method therefor, the wireless communication device including: a control section that, in a case of detecting an interference signal which interferes with a wireless signal, sets a modulation and coding scheme on the basis of interference power of the interference signal; and a communication section that starts transmission of the wireless signal by the set modulation and coding scheme, and changes the modulation and coding scheme after passage of a change timing substantially matching a timing at which transmission of the interference signal ends. This exhibits an effect that the modulation and coding scheme is changed after passage of the change timing substantially matching a timing at which transmission of the interference signal ends.

Furthermore, in the first aspect, the control section may estimate interference power after passage of the change timing, and may set the post-change modulation and coding scheme on the basis of an estimation value. This exhibits an effect that the modulation and coding scheme is changed according to the estimation value of the interference power after passage of the change timing.

Furthermore, in the first aspect, the control section may set the pre-change modulation and coding scheme on the basis of a signal to interference plus noise ratio that is obtained from the interference power of the detected interference signal, and may set the post-change modulation and coding scheme on the basis of a signal to interference plus noise ratio that is obtained from the estimation value. This exhibits an effect that the modulation and coding scheme is set according to the signal to interference plus noise ratio.

Furthermore, in the first aspect, the estimation value may be a maximum value of interference power of a plurality of interference sources after passage of the change timing. This exhibits an effect that the modulation and coding scheme is changed according to the maximum value of interference power after passage of the change timing.

Furthermore, in the first aspect, the communication section may transmit the wireless signal including a preamble in which the pre-change modulation and coding scheme, and a length of a signal to be transmitted by the pre-change modulation and coding scheme are written. This exhibits an effect that the wireless signal including the preamble in which the pre-change modulation and coding scheme and the length of a signal to be transmitted by the modulation and coding scheme are written, is transmitted.

Furthermore, in the first aspect, the post-change modulation and coding scheme may be further written in the preamble. This exhibits an effect that the wireless signal including the preamble in which the post-change modulation and coding scheme is further written is transmitted.

Furthermore, in the first aspect, the wireless signal may further include a plurality of PSDUs (PLCP Service Data Units) and a predetermined field inserted between the plurality of PSDUs, and the post-change modulation and coding scheme may be written in the predetermined field. This exhibits an effect that the wireless signal in which the field in which the post-change modulation and coding scheme is written is inserted between the PSDUs, is transmitted.

Furthermore, in the first aspect, the wireless signal may include a predetermined number of symbols, and the communication section may perform coding and modulation in units of the symbols by the coding and modulation scheme. This exhibits an effect that a signal having undergone coding and modulation is transmitted in units of the symbols.

Furthermore, in the first aspect, the control section may obtain the change timing from a transmission start timing of the wireless signal, the timing at which transmission of the interference signal ends, and a length of the symbols. This exhibits an effect that the modulation and coding scheme is changed at the change timing obtained from the transmission start timing of the wireless signal, the timing at which transmission of the interference signal ends, and the length of the symbols.

Furthermore, in the first aspect, the communication section may transmit the wireless signal including an index that is allocated to the modulation and coding scheme. This exhibits an effect that a signal is received by the modulation and coding scheme corresponding to an MCS index.

Furthermore, in the first aspect, the index may be written in an MCS (Modulation and Coding Scheme) field according to an IEEE802.11ax standard. This exhibits an effect that communication using the IEEE802.11ax standard is performed.

In addition, a second aspect of the present technique is a communication system including: a transmission device that, in a case of detecting an interference signal which interferes with a wireless signal, sets a modulation and coding scheme on the basis of interference power of the interference signal, starts transmission of the wireless signal by the set modulation and coding scheme, and changes the modulation and coding scheme after passage of a change timing substantially matching a timing at which transmission of the interference signal ends; and a reception device that starts reception of the wireless signal by the set modulation and coding scheme, and changes the modulation and coding scheme after passage of the change timing. This exhibits an effect that, at each of the transmission devices and the reception deices, the modulation and coding scheme is changed after passage of the change timing substantially matching the timing at which transmission of the interference signal ends.

[Advantageous Effects of Invention]

The present technique can exhibit an excellent effect that, in a communication system in which a wireless signal is transmitted and received, any trouble caused by radio-wave interferences can be suppressed. Note that the effect described herein is not necessarily limited, and any of effects described in the present disclosure may be exhibited.

[Brief Description of Drawings]

[FIG. 1]

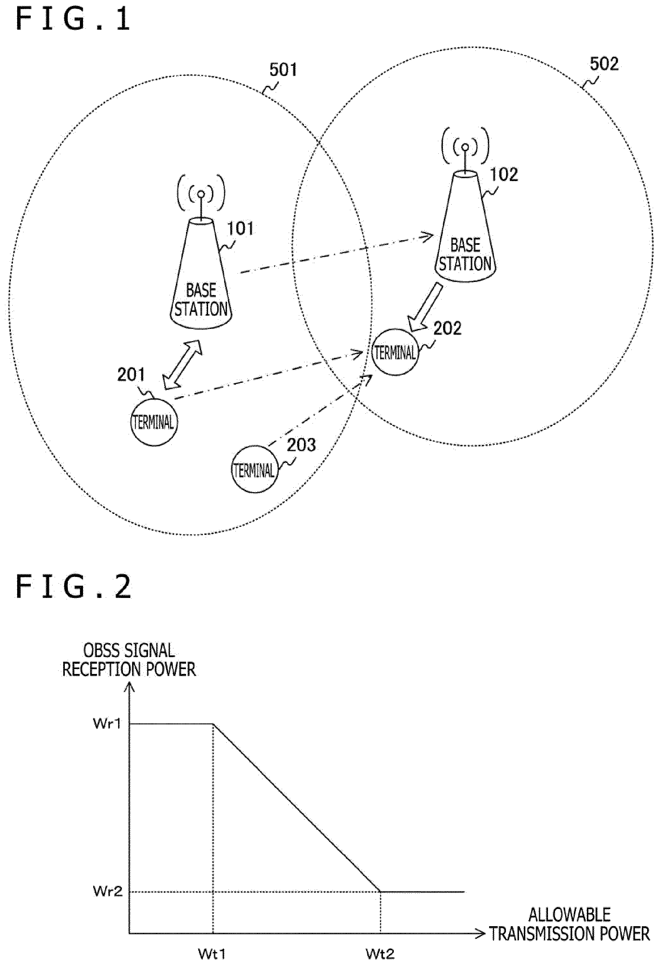

FIG. 1 is an entire view depicting one configuration example of a communication system according to a first embodiment of the present technique.
[FIG. 2]
FIG. 2 is a graph depicting one example of the relationship between reception power and allowable transmission power according to the first embodiment of the present technique.
[FIG. 3]

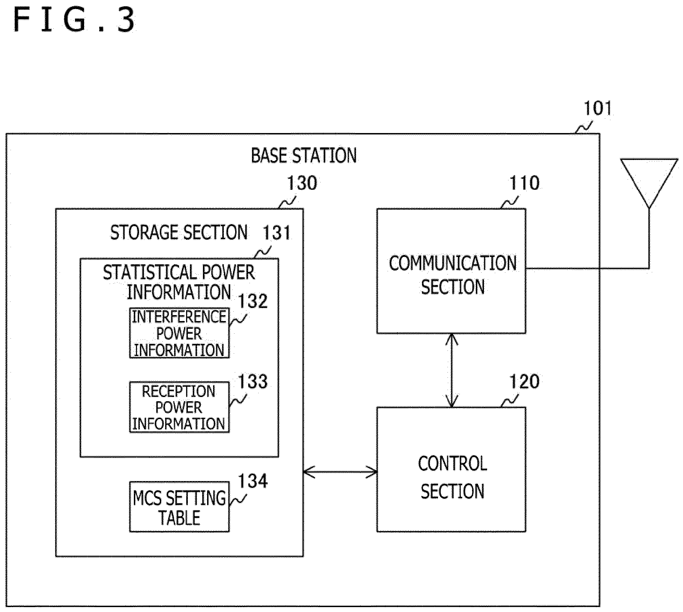

FIG. 3 is a block diagram depicting one configuration example of a base station according to the first embodiment of the present technique.
[FIG. 4]

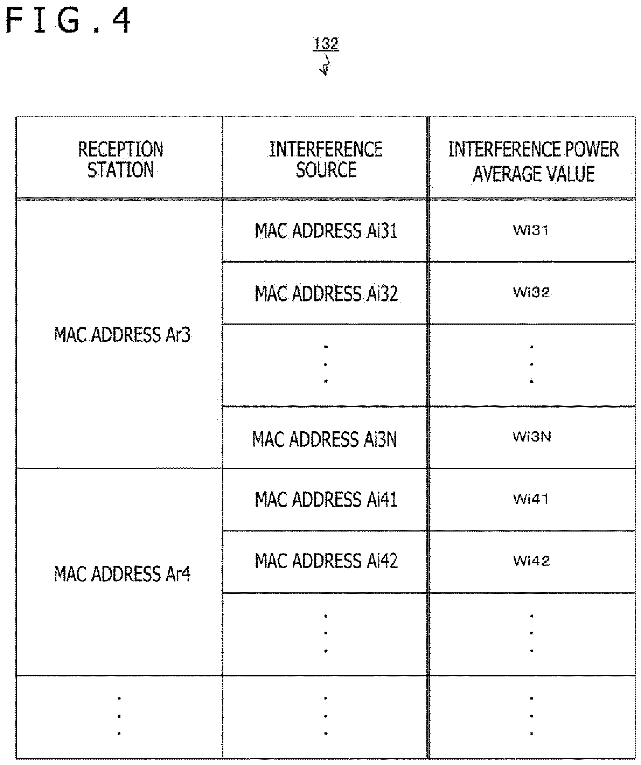

FIG. 4 is a diagram depicting one example of interference power information according to the first embodiment of the present technique.
[FIG. 5]

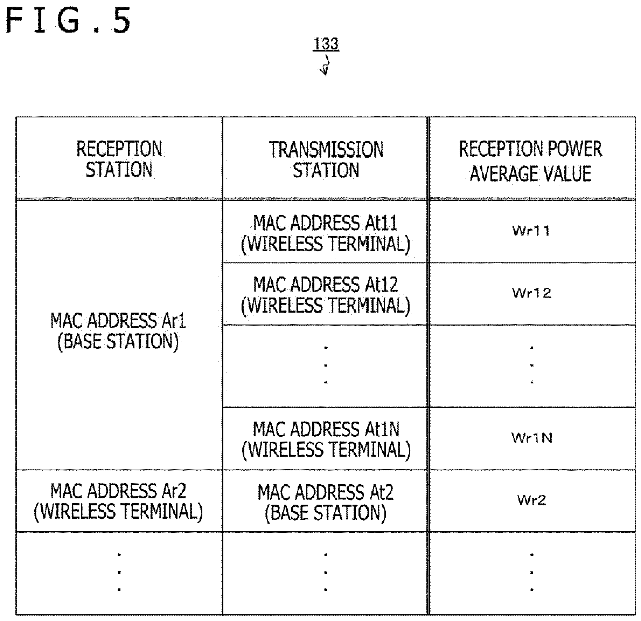

FIG. 5 is a diagram depicting one example of reception power information according to the first embodiment of the present technique.
[FIG. 6]

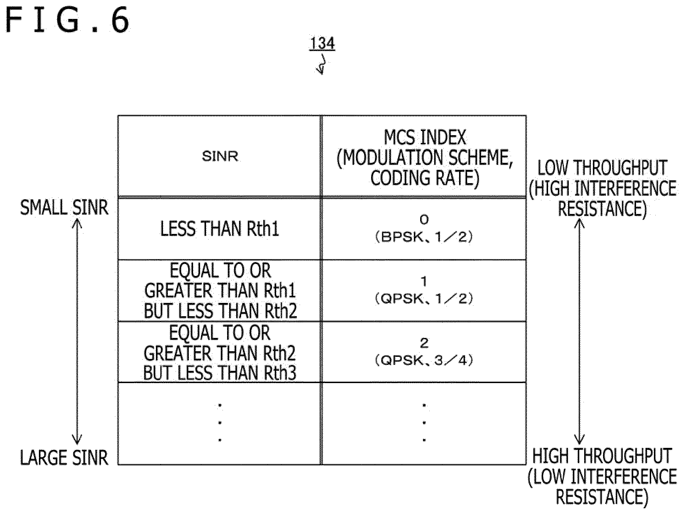

FIG. 6 is a diagram depicting one example of an MCS setting table according to the first embodiment of the present technique.
[FIG. 7]

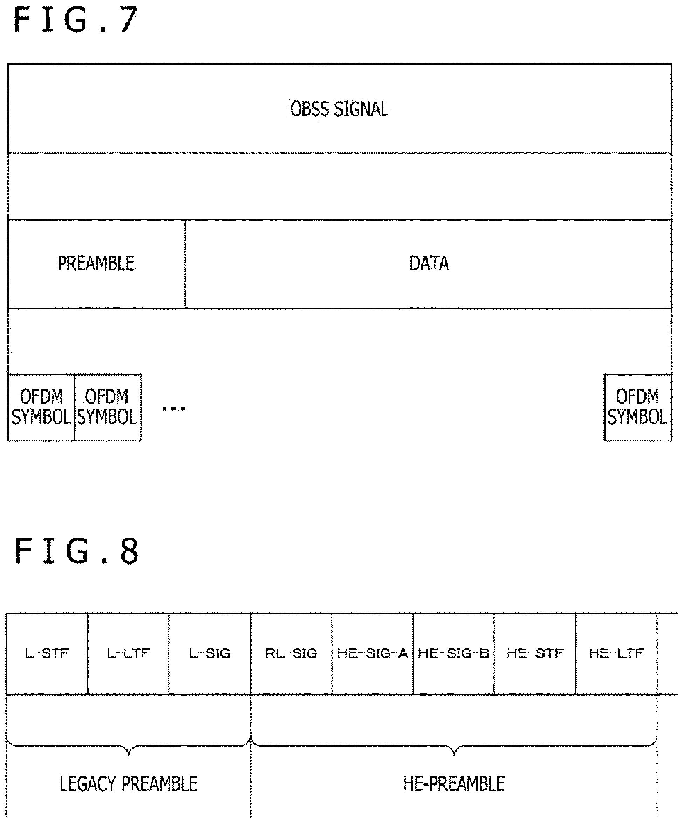

FIG. 7 is a diagram depicting one example of the data structure of an OBSS signal according to the first embodiment of the present technique.
[FIG. 8]
FIG. 8 is a diagram depicting the field format of a preamble of an OBSS signal according to the first embodiment of the present technique.
[FIG. 9]

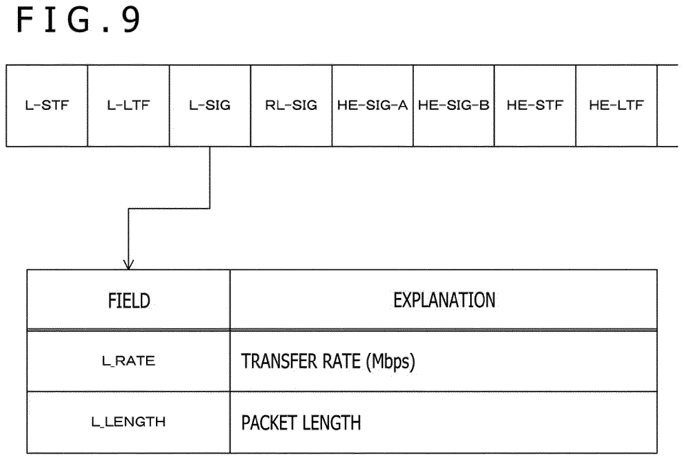

FIG. 9 is a diagram depicting the field format of L-SIG of an OBSS signal according to the first embodiment of the present technique.
[FIG. 10]

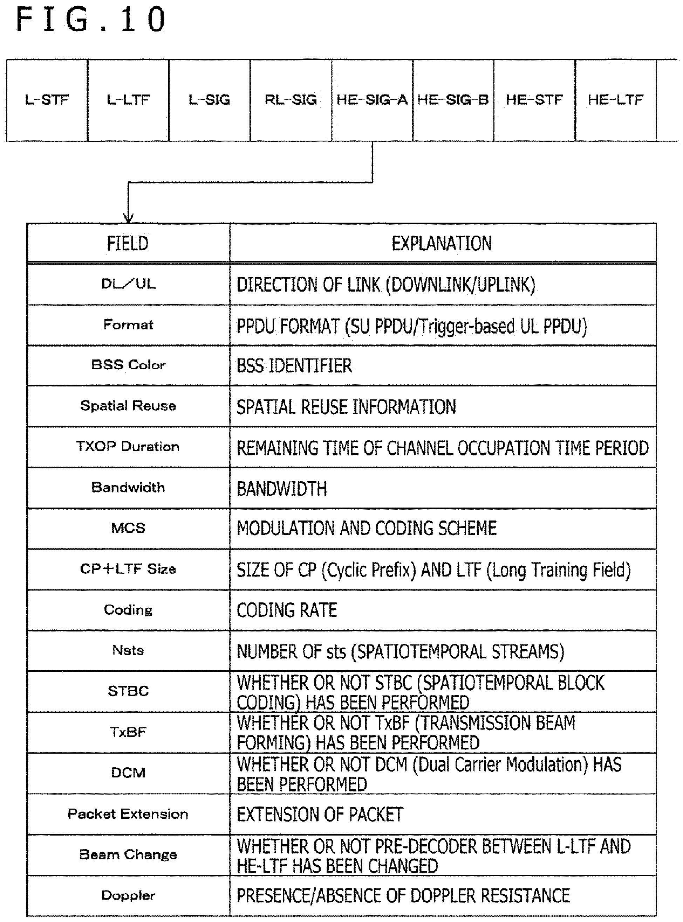

FIG. 10 is a diagram depicting the field format of HE-SIG-A of an OBSS signal according to the first embodiment of the present technique.
[FIG. 11]

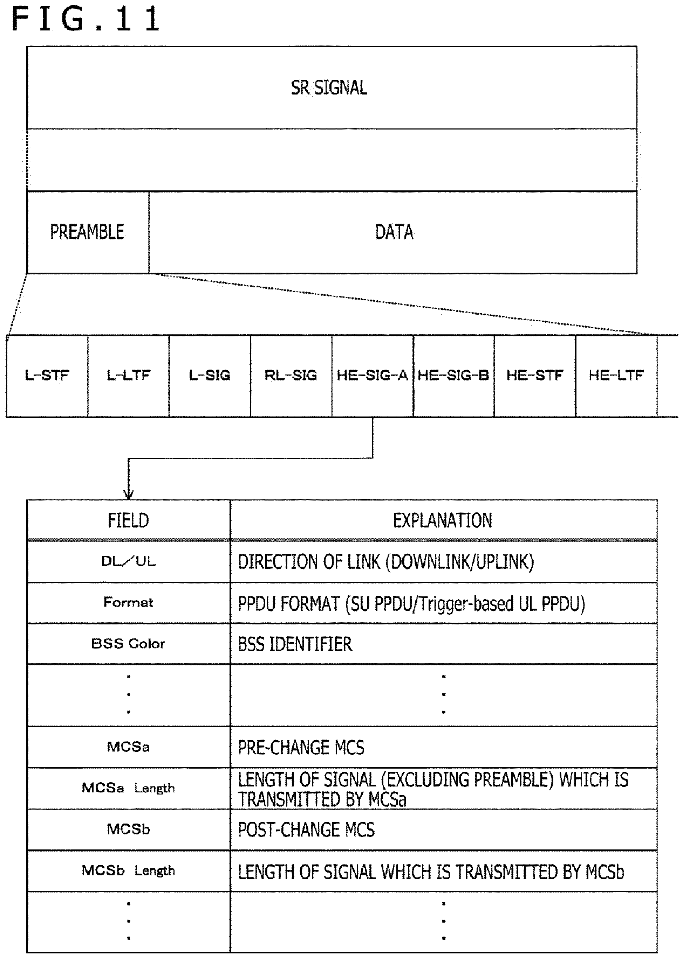

FIG. 11 is a diagram depicting one example of the data structure of an SR signal according to the first embodiment of the present technique.
[FIG. 12]

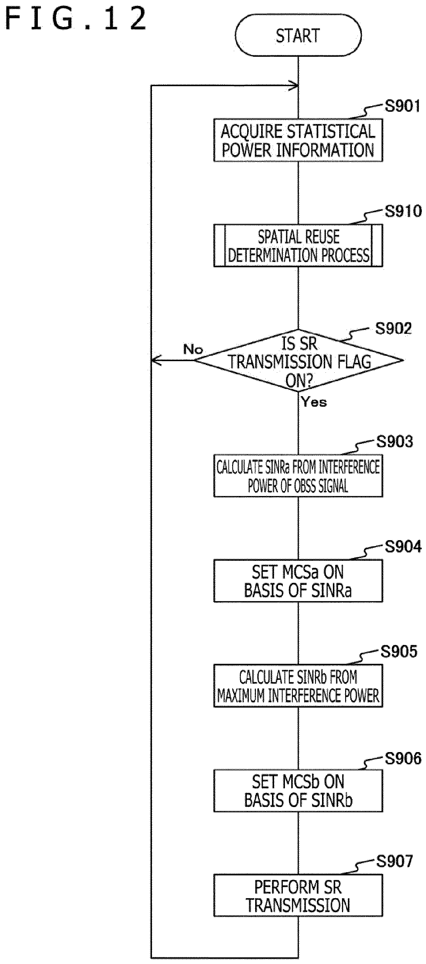

FIG. 12 is a flowchart depicting one example of operation of a wireless communication device according to the first embodiment of the present technique.
[FIG. 13]

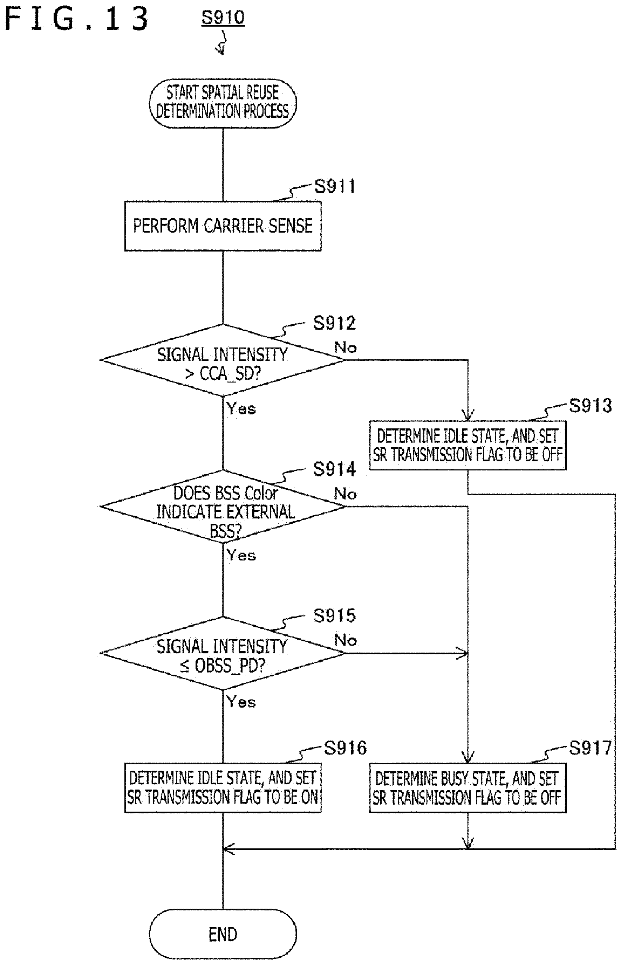

FIG. 13 is a flowchart depicting a spatial reuse determination process according to the first embodiment of the present technique.
[FIG. 14]

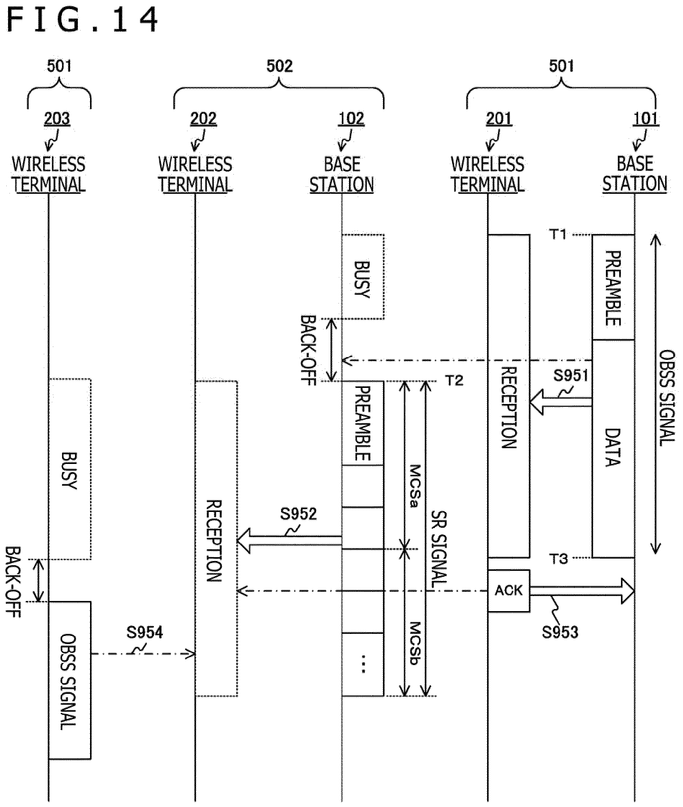

FIG. 14 is a sequence diagram depicting one example of operation of a communication system according to the first embodiment of the present technique.
[FIG. 15]

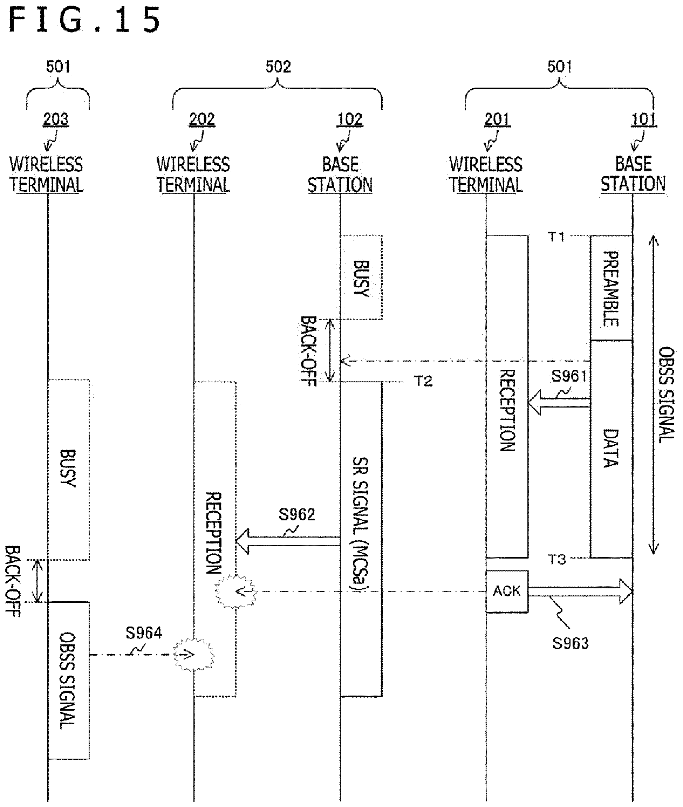

FIG. 15 is a sequence diagram depicting one example of operation of a communication system according to a modification.
[FIG. 16]

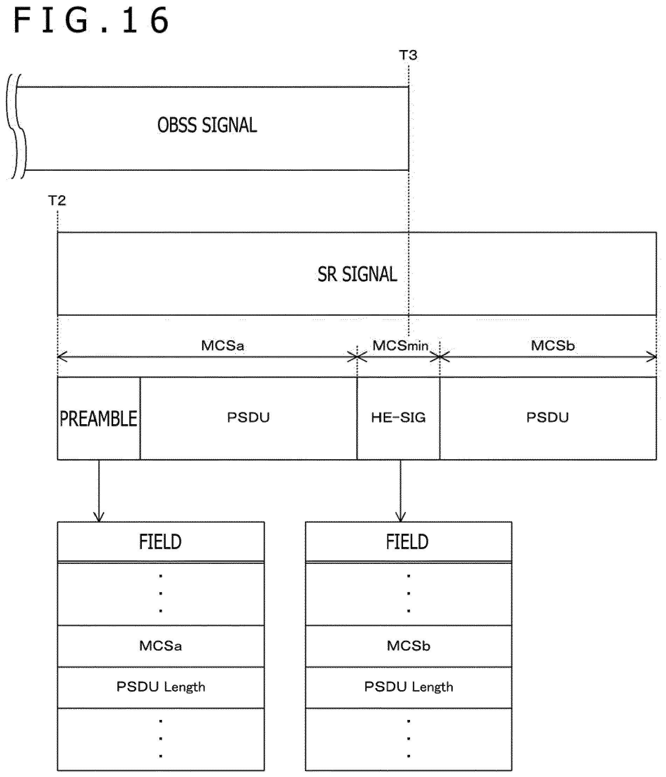

FIG. 16 is a diagram depicting one example of the data structure of an SR signal according to a second embodiment of the present technique.

[Description of Embodiments]

Hereinafter, embodiments for implementing the present technique (hereinafter, each referred to as an embodiment) will be explained. The explanation will be given in accordance with the following order.

1. First Embodiment (embodiment in which an MCS is changed when transmission of an interference signal ends)
2. Second Embodiment (embodiment in which an MCS is written outside a preamble, and the MCS is changed when transmission of an interference signal ends)

<1. First Embodiment>

[Configuration Example of Communication System]

FIG. 1 is an entire view depicting one configuration example of a communication system according to the first embodiment of the present technique. A plurality of BSSs (Basic Service Sets) such as a BSS 501 and a BSS 502 is provided in the communication system. Here, each of the BSSs means a network including a base station and a wireless terminal that is connected to the base station. Such a network including a base station and a wireless terminal is also called an infrastructure network. Note that each of the BSSs is one example of the network set forth in the claims.

For example, the BSS 501 includes a base station 101 and wireless terminals 201 and 203. For example, the BSS 502 includes a base station 102 and a wireless terminal 202. Note that a base station is also called an access point or a master device. A wireless terminal is also called a slave device.

Note that the base stations including the base station 101, etc., and the wireless terminals including a wireless terminal 201, etc., are each one example of the wireless communication device set forth in the claims.

Moreover, the BSS 501 and the BSS 502 are assumed to be adjacent to each other and use the same frequency channel. Thus, in some cases, a signal from a BSS (e.g., the BSS 502) external to a certain BSS (e.g., the BSS 501) becomes an interference signal which interferes with a wireless signal being transmitted/received within the BSS 501. In FIG. 1, outlined arrows each indicate a path of a wireless signal which is subjected to interference, and dashed lines each indicate a path of an interference signal.

Further, the IEEE802.11 standard is used in wireless communication. The IEEE802.11 standard has a variety of types including IEEE802.11a and IEEE802.11b. In the aforementioned communication system, IEEE802.11ax is used, for example.

According to the IEEE802.11ax standard, in order to avoid collision between signals, each wireless communication device (base station or wireless terminal) determines whether the state of a medium is a busy state or an idle state. One of the schemes for such determination is a CSMA/CA (Carrier Sense Multiple Access/Collision Avoidance) scheme. According to the CSMA/CA scheme, when transmitting a signal, each wireless communication device detects a medium, and determines the state of the medium by using a predetermined threshold as a reference.

In the IEEE802.11ax standard, a signal detection threshold CCA_SD (Cooperative Collision Avoidance Signal Detect) is used as a threshold for signal intensities. In the case where the signal intensity of a signal received from a separate wireless communication device is greater than the CCA_SD, a wireless communication device having received the signal generally determines that the medium is in a busy state, and refrains from transmitting a signal.

For example, the signal intensity RSSI (Received Signal Strength Indication) of a signal received by the base station 102 from the base station 101, is assumed to be "-80 dBm." Here, if the CCA_SD is set to "-82 dBm," the signal intensity of the received signal is greater than the CCA_SD. Thus, the base station 102 does not transmit any signal in accordance with the general rule of the CSMA/CA scheme.

However, in the case where the base station 101 and the base station 102 belong to different BSSs, transmission of a new signal from the base station 102 may cause no problem within the BSS 501 to which the base station 101 belongs.

Therefore, in the IEEE802.11ax standard, allowing overlapping of networks under a certain condition is being taken into consideration. In this case, an adjacent network is called an OBSS (Overlapping Basic Service Set). An OBSS threshold OBSS_PD (Overlapping Basic Service Set Packet Detect) is used as a threshold in the case where networks overlap each other. In the case where the signal intensity of a signal received from a separate wireless communication device is greater than the CCA_SD, a wireless communication device determines whether or not the signal is a signal (hereinafter, referred to as "OBSS signal") transmitted from the outside of a BSS to which the wireless communication device itself belongs, by referring to BSS Color. Here, BSS Color is as an identifier for identifying the BSS. When the received signal is an OBSS signal and the signal intensity thereof is not greater than the OBSS_PD, the wireless communication device determines that the medium is in an idle state.

For example, when a signal received by the base station 102 is a signal (i.e., an OBSS signal) transmitted from the base station 101 in the separate BSS 501 and the OBSS_PD is set to "-72 dBm," the signal intensity of the signal is equal to or less than the OBSS_PD. Thus, the base station 102 determines that the medium is in an idle state, and becomes able to transmit a signal.

As explained so far, a wireless communication device starts transmission of a signal under a certain condition during transmission of an OBSS signal, so that the use efficiency of a medium can be improved. This is called an SR technology. Hereinafter, a signal transmission of which is started by a wireless communication device according to the SR technology during transmission of an OBSS signal, is referred to as "SR signal." Such an SR signal may receive an interference from an OBSS signal. Therefore, in order to suppress the interference, transmission power of the SR signal is adjusted according to reception power of the OBSS signal. For example, when the reception power of the OBSS signal is high, the wireless communication device determines that the transmission source of the OBSS signal is near, and lowers the transmission power of the SR signal so as not to disturb reception of the SR signal. On the other hand, when the reception power of the OBSS signal is low, the wireless communication device increases the transmission power of the SR signal. Hereinafter, a signal that is transmitted with transmission power set to a default value without undergoing such adjustment of transmission power, is referred to as "non-SR signal." Note that an SR signal is one example of the wireless signal set forth in the claims, and an OBSS signal is one example of the interference signal set forth in the claims.

FIG. 2 is a graph depicting one example of the relationship between reception power and allowable transmission power according to the first embodiment of the present technique. In FIG. 2, the ordinate indicates the reception power of an OBSS signal, and the abscissa indicates the allowable transmission power of an SR signal.

For example, in the case where the reception power of an OBSS signal is Wr1, allowable transmission power of Wt1 or lower is set. In the case where reception power is Wr2 that is lower than Wr1, allowable transmission power of at least Wt2 that is higher than Wt1 is set. Further, in the case where the reception power is Wr1 to Wr2, higher allowable transmission power is set for lower reception power within a range of Wt1 to Wt2.

[Configuration Example of Base Station]

FIG. 3 is a block diagram depicting one configuration example of the base station 101 according to the first embodiment of the present technique. The base station 101 incudes a communication section 110, a control section 120, and a storage section 130. The base station 102 and wireless terminals such as the wireless terminal 201, etc., each have a similar configuration to that of the base station 101.

The communication section 110 is configured to wirelessly transmit/receive a signal under control of the control section 120. The storage section 130 is configured to store data such as statistical power information 131 and an MCS setting table 134. The statistical power information 131 includes interference power information 132 and reception power information 133.

The interference power information 132 indicates, for each wireless communication device, a statistical amount (e.g., the average value) of interference power measured by the device. The reception power information 133 indicates, for each wireless communication device, a statistical amount (e.g., the average value) of reception power of an SR signal addressed to the device. In the MCS setting table 134, an SINR and an MCS index are associated with each other. Here, the MCS index is a numeral value allocated to a combination (i.e., MCS) of a modulation scheme and a coding rate. A modulation scheme and a coding rate are specified by the MCS index.

The control section 120 is configured to control the communication section 110. Prior to transmission of a signal, the control section 120 determines whether or not the signal intensity of a signal received by the communication section 110 is greater than the CCA_SD. When the signal intensity is equal to or less than the CCA_SD, the control section 120 determines that the medium is in an idle state, and causes the communication section 110 to start transmission of a signal (i.e., a non-SR signal) for which transmission power is set to a default value.

On the other hand, in the case where the signal intensity is greater than the CCA_SD, the control section 120 determines whether or not the received signal is an OBSS signal, by referring to BSS Color. In the case where the received signal is not an OBSS signal, the control section 120 determines that the medium is in a busy state, and causes the communication section 110 to suppress transmission of a signal. On the other hand, in the case where the received signal is an OBSS signal (in other words, an OBSS signal is detected), the control section 120 determines whether or not the signal intensity of the signal is greater than the OBSS_PD.

In the case where the signal intensity is greater than the OBSS_PD, the control section 120 determines that the medium is in a busy state. On the other hand, in the case where the signal intensity is equal to or less than the OBSS_PD, the control section 120 determines that the medium is in an idle state, and causes the communication section 110 to start transmission of an SR signal.

When causing transmission of an SR signal, the control section 120 obtains the transmission time period of the OBSS signal on the basis of information in a preamble of the OBSS signal. Then, the control section 120 sets an MCS as MCSa on the basis of interference power of the OBSS signal (i.e., an interference signal). For example, the control section 120 acquires the average value of the interference power of the OBSS signal from the interference power information 132, and acquires the average value of the reception power of the SR signal from the reception power information 133. Subsequently, the control section 120 calculates an SINR by using the following expression, acquires an MCS corresponding to the SINR from the MCS setting table 134, and sets the MCS as MCSa.

$$SINR = S/(I + N) \ldots Expression \ 1$$

In the above expression, S represents reception power, I represents interference power, and N represents noise power. The unit of these power is milliwatt (mW), for example. The average value of the reception power of the SR signal is substituted for S, and the average value of the interference power of the OBSS signal is substituted for I. A measurement value obtained by preliminary measurement is substituted as the noise power.

As a result of transmission of the SR signal by the MCSa, an interference to the SR signal can be minimized during transmission of the OBSS signal. However, the interference power may change after transmission of the OBSS signal ends. Therefore, the control section 120 estimates interference power after the end of transmission of the OBSS signal, and sets, as MCSb, an MCS that is different from the MCSa on the basis of the estimation value. For example, the maximum value of interference power of interference sources after the end of transmission is used as the estimation value. The estimation value is substituted for I in Expression 1. The control section 120 supplies the MCSa, the MCSb, and a change timing substantially matching a timing at which transmission of the OBSS signal ends, to the communication section 110.

The communication section 110 starts transmission of the SR signal by the MCSa, and continues transmission of the SR signal by changing the MCSa to the MCSb after passage of the change timing. The MCSa, the MCSb, and the respective lengths thereof are written in a preamble of the SR signal, for example.

Also, in the case where the base station 101 is a reception-side device for the SR signal, the control section 120 acquires the change timing from the length of the MCSa by referring to the preamble of the SR signal. Subsequently, the communication section 110 starts reception of the SR signal by the MCSa. The communication section 110 continues reception of the SR signal by changing the MCSa to the MCSb after passage of the change timing.

Also, the communication section 110 regularly measures the interference power of an OBSS signal (interference signal) for each of interference sources. The control section 120 obtains the statistical amount of the interference power, and generates the interference power information 132. The communication section 110 transmits the interference power information 132 to a separate device, receives interference power information from the separate device, and adds the received interference power information to the interference power information 132 of the station in which the communication section 110 is included.

Also, the communication section 110 regularly measures the reception power of an SR signal addressed to the station in which the communication section 110 is included, and the control section 120 obtains the statistical amount of the reception power, and generates the reception power information 133. The communication section 110 transmits the reception power information 133 to a separate device, receives reception power information from the separate device, and adds the received reception power information to the reception power information 133 of the station in which the communication section 110 is included.

[Example of Interference Power Information]

FIG. 4 is a diagram depicting one example of the interference power information 132 according to the first embodiment of the present technique. The interference power information 132 includes, for each reception station, the average value of interference power measured by the reception station for a predetermined number of interference sources, respectively. Here, a reception station means a wireless communication device (a base station or a wireless terminal) that has received a signal. For example, in the case where a reception station having an MAC address Ar3 detects an interference signal from an interference source having an MAC address Ai31, an interference power average value Wi31 of the interference signal is recorded. Also, in the case where a reception station having an MAC address Ar3 detects an interference signal from an interference source having an MAC address Ai32, an interference power average value Wi32 of the interference signal is recorded.

In the communication system depicted in FIG. 1, the base station 101 and the wireless terminals 201 and 203 belonging to the BSS 501 external to the base station 102, can become interference sources. The base station 102 regularly measures interference power for each of the interference sources, and obtains the interference power average value the by using an EMA (Exponential Moving Average) filter or the like. The cycle for obtaining the average value is adjusted by a parameter indicating the number of samples in the EMA filter. The base station 102 cannot measure power of an interference signal received by a separate device (e.g., the wireless terminal 202), and thus, acquires the interference power average value corresponding to the separate device by exchanging interference power information with the device. Exchange of the interference power information is regularly executed.

Exchange of interference power information is executed by multicasting of interference power information from a base station to each of wireless terminals within a BSS, and transmitting measurement reports including interference power information from the wireless terminals to the base station, for example.

Note that a wireless communication device regularly executes measurement of interference power and exchange of interference power information, but is not limited to this configuration. A wireless communication device may execute measurement of interference power and exchange of interference power information when a predetermined event such as addition of a new wireless communication device to a BSS occurs, for example.

[Example of Reception Power Information]

FIG. 5 is a diagram depicting one example of the reception power information 133 according to the first embodiment of the present technique. The reception power information 133 includes, for each reception station, the average value of reception power of respective SR signals from a predetermined number of transmission stations. Here, a transmission station means a wireless communication device (a base station or a wireless terminal) that has transmitted a signal. For example, in the case where a base station having an MAC address Ar1 receives an SR signal addressed to the base station from a wireless terminal having an MAC address At11, a corresponding reception power average value Wr11 is recorded. Also, in the case where the base station having the MAC address Ar1 receives an SR signal addressed to the base station from a wireless terminal having an MAC address At12, a corresponding reception power average value Wr12 is recorded.

Here, even in the case where the reception power of an SR signal is not measured, a wireless communication device can calculate the reception power of the SR signal from the measurement value of the reception power of a non-SR signal. For example, the path loss may be obtained from the transmission power and reception power of a non-SR signal, and the reception power of the SR signal may be calculated from the transmission power of an SR signal and the path loss.

Here, in the case where the base station is a reception station, reception power is measured for each of a predetermined number of wireless terminals connected to the base station, respectively. On the other hand, in the case where a reception station is a wireless terminal, only the reception power of an SR signal from the base station is measured because a signal addressed to the reception station is inevitably transmitted from the base station.

In the communication system depicted in FIG. 1, the base station 101 receives signals addressed to the base station 101 from the wireless terminals 201 and 203. The base station 101 regularly measures the reception power for each of the transmission stations, and obtains a reception power average value by using an EMA filter or the like. The base station 101 acquires a reception power average value corresponding to a separate device (e.g., the wireless terminal 201) by exchanging reception power information with the separate device because the base station 101 cannot measure the reception power of a signal received by a separate device. Exchange of the reception power information is regularly executed.

Note that a wireless communication device regularly executes measurement of reception power and exchange of reception power information, but is not limited to this configuration. A wireless communication device may execute measurement of reception power and exchange of reception power information when a predetermined event such as addition of a new wireless communication device to a BSS occurs, for example.

[Configuration Example of MCS Setting Table]

FIG. 6 is a diagram depicting one example of the MCS setting table 134 according to the first embodiment of the present technique. In the MCS setting table 134, an SINR and an MCS index are written in association with each other. Here, a modulation scheme corresponding to an MCS index is used when a wireless signal is modulated in units of so-called symbols. BPSK (Binary Phase Shift Keying) or QPSK (Quadrature Phase Shift Keying) is set as the modulation scheme. As another modulation scheme, 16-QAM (Quadrature Amplitude Modulation), 64-QAM, or the like may be set. In addition, a coding rate corresponding to an MCS index is a ratio of the length of symbols before coding and the length of symbols after coding when coding is performed in units of symbols.

In general, with a smaller MCS index, the interference resistance of a wireless signal can be made higher but the throughput is deteriorated. On the other hand, with a greater MCS index, the interference resistance of a wireless signal becomes lower but the throughput can be increased. Therefore, when an SINR is smaller (in other words, when interference power is high with respect to reception power), a smaller MCS index is set in order to increase the interference resistance. However, since the throughput is deteriorated with a smaller MCS index, an MCS is set in association with an SINR so as to have the maximum MCS within a range that does not cause any trouble due to radio-wave interferences under the environment of the SINR.

For example, in the case where an SINR is less than a comparison threshold Rth1, an MCS index of "0" is set. A modulation scheme and a coding rate corresponding to the MCS index are BPSK and "1/2," respectively, for example. Also, in the case where an SINR is not less than the comparison threshold Rth1 but less than a comparison threshold Rth2, an MCS index of "1" is set. A modulation scheme and a coding rate corresponding to the MCS index are QPSK and "1/2," respectively, for example.

Note that, in a wireless communication device such as the base station 101, an MCS index is written in the MCS setting table 134, but a modulation scheme and a coding rate may be directly written instead of the MCS index.

[Data Structure of OBSS Signal]

FIG. 7 is a diagram depicting one example of the data structure of an OBSS signal according to the first embodiment of the present technique. The OBSS signal includes a preamble and data. Further, the OBSS signal is transmitted in units of OFDM (Orthogonal Frequency Division Multiplexing) symbols, for example. Modulation and coding by an MCS is performed in units of OFDM symbols.

FIG. 8 is a diagram depicting the field format of the preamble of the OBSS signal according to the first embodiment of the present technique.

In IEEE802.11ax, a legacy preamble and an HE-preamble are provided for a preamble. A legacy preamble is for maintaining compatibility with a conventional IEEE802.11 device. An HE-preamble is the IEEE802.11ax standard (HE is an abbreviation of High-Efficiency) preamble.

The IEEE802.11ax standard is under consideration. The details thereof have not been fixed. An explanation will be given herein with reference to the public information under consideration. Note that the public information associated with the IEEE802.11ax standard can be acquired from the following URL: http://mentor.ieee.org/802.11/documents

A legacy preamble includes L-STF, L-LTF, and L-SIG. L-STF (Legacy Short Training Field) and L-LTF (Legacy Long Training Field) are fields for synchronization. L-SIG (Legacy Signal Field) is a field including information such as a transfer rate and a packet length.

An HE-preamble includes RL-SIG, HE-SIG-A, HE-SIG-B, HE-STF, and HE-LTF. RL-SIG (Repeated Legacy Signal Field) is a filed including information similar to that in L-SIG of a legacy preamble. HE-SIG-A (High Efficiency Signal A Field) is a field including information useful for a third party having received the corresponding signal. HE-SIG-B (High Efficiency Signal B Field) is a field including information useful for a destination user of the corresponding signal. HE-STF (High Efficiency Short Training Field) and HE-LTF (High Efficiency Long Training Field) are fields for synchronization.

FIG. 9 is a diagram depicting the field format of L-SIG of an OBSS signal according to the first embodiment of the present technique. L-SIG includes L-RATE and L-LENGTH.

L-RATE is a filed indicating a transfer rate (Mbps). L-LENGTH is a field indicating a packet length. Therefore, the value "L-LENGTH/L-RATE" obtained by dividing L-LENGTH by L-RATE indicates the transmission period (PPDU length) of a packet signal of this frame. In the present embodiment, when an idle state is determined for an OBSS signal on the basis of the OBSS_PD, the signal intensity is determined with use of the CCA_SD as a threshold during the transmission period of the OBSS signal.

FIG. 10 is a diagram depicting the field format of HE-SIG-A of an OBSS signal according to the first embodiment of the present technique.

"DL/UL" is a field indicating the direction of a link, that is, a downlink (a link from a base station to a wireless terminal) or an uplink (a link from a wireless terminal to a base station). "Format" is a field indicating whether the type of a PPDU format is "SU PPDU" or "Trigger-based UL PPDU." "BSS Color" is a field indicating the BSS identifier of a network. "Spatial Reuse" is a field indicating spatial reuse information.

"TXOP Duration" is a field indicating the remaining time of a channel occupation time. "Bandwidth" is a field indicating a bandwidth. MCS is a field indicating an index of a Modulation and Coding Scheme. "CP + LTF Size" is a field indicating the size of CP (Cyclic Prefix) and LTF (Long Training Field). "Coding" is a field indicating a coding rate.

"Nsts" is a field indicating the number of sts (spatiotemporal streams). "STBC" is a field indicating whether or not spatiotemporal block coding has been performed. "TxBF" is a field indicating whether or not transmission beam forming has been performed. "DCM" is a field indicating whether or not DCM (Dual Carrier Modulation) has been performed. "Packet Extension" is a field indicating extension of a packet. "Beam Change" is a field indicating whether or not a pre-decoder between L-LTF and HE-LTF has been changed. "Doppler" is a field indicating the presence/absence of doppler resistance.

Among these fields, "BSS Color" is referred to in order to determine whether or not a signal received at a wireless communication device is a signal (i.e., an OBSS signal) from an external BSS. In the case where the received signal is an OBSS signal, threshold comparison using OBSS_PD is performed.

[Data Structure of SR Signal]

FIG. 11 is a diagram depicting one example of the data structure of an SR signal according to the first embodiment of the present technique. The data structure of an SR signal is similar to that of an OBSS signal. However, these signals are partially different in information written in HE-SIG-A. In HE-SIG-A of an SR signal, "MCSa," "MCSa Length," "MCSb," and "MCSb Length" fields are provided instead of MCS. The control section 120 sets parameters therefor, and supplies setting of the parameters to the communication section 110. The communication section 110 generates and transmits an SR signal in accordance with the setting.

Information (e.g., an MCS index) indicating a pre-change modulation and coding scheme is written in "MCSa." "MCSa Length" indicates the length of a signal (data) excluding a preamble to be transmitted by the MCSa. For example, the number of OFDM symbols in the data is set in "MCSa Length." A method for calculating "MCSa Length" will be explained later. Note that, instead of an MCS index, a modulation scheme and a coding rate themselves may be written in the "MCSa" field.

Information indicating a post-change modulation and coding scheme is written in "MCSb." "MCSb Length" indicates the length of a signal to be transmitted by the MCSb.

Note that the wireless communication device is configured to write "MCSb Length" in a preamble, but may be configured not to write this information. In this case, a reception-side wireless communication device acquires a packet length (L-LENGTH) and "MCSa Length" from a preamble of a received SR signal. Subsequently, the wireless communication device may obtain the sum of the length of the preamble and "MCSa Length," and calculate, as "MCSb Length", the difference between the sum and the packet length.


[Operation Example of Wireless Communication Device]


FIG. 12 is a flowchart depicting one example of operation of a wireless communication device such as the base station 101 according to the first embodiment of the present technique. This operation starts when the wireless communication device is turned on, for example. The wireless communication device acquires statistical power information through measurement or exchange with a separate device (step S901). Subsequently, the wireless communication device executes a spatial reuse determination process for determining whether or not an SR signal can be transmitted (step S910). In the case where SR transmission is determined to be possible by the special reuse determination process, an SR transmission flag is set to be on.

The wireless communication device determines whether or not the SR transmission flag is on (step S902). In the case where the SR transmission flag is off (step S902: No), the wireless communication device transmits a non-SR signal when the medium is in an idle state, and executes step S901 and later steps.

On the other hand, in the case where the SR transmission flag is on (step S902: Yes), the wireless communication device calculates an SINR from interference power of an OBSS signal (an interference signal), and sets the calculated SINR as an SINRa (step S903). Subsequently, the wireless communication device sets an MCS as an MCSa on the basis of the SINRa (step S904).

Also, the wireless communication device calculates an SINR from the maximum interference power after the end of transmission of the OBSS signal, and sets the calculated SINR as an SINRb (step S905). Subsequently, the wireless communication device sets an MCS as an MCSb on the basis of the SINRb (step S906). The wireless communication device transmits an SR signal by the MCSa and MCSb (step S907). After step S907, the wireless communication device repeatedly executes step S901 and later steps.

FIG. 13 is a flowchart depicting a spatial reuse determination process according to the first embodiment of the present technique. The wireless communication device performs carrier sense when data transmission is needed (step S911), and determines whether or not the signal intensity of the received signal is greater than the CCA_SD (step S912).

In the case where the signal intensity is equal to or less than the CCA_SD (step S912: No), the wireless communication device determines that the medium is in an idle state, and sets the SR transmission flag to be off (step S913). On the other hand, in the case where the signal intensity is greater than the CCA_SD (step S912: Yes), the wireless communication device determines whether or not BSS Color of the received signal indicates an external BSS (step S914).

In the case where the BSS Color indicates an external BSS (step S914: Yes), the wireless communication device detects an OBSS signal, and determines whether or not the signal intensity of the OBSS signal is equal to or less than the OBSS_PD (step S915).

In the case where the signal intensity of the OBSS signal is equal to or less than the OBSS_PD (step S915: Yes), the wireless communication device determines that the medium is in an idle state, and sets the SR transmission flag to be on (step S916).

On the other hand, in the case where BSS Color does not indicate an external BSS (step S914: No) or in the case where the signal intensity is greater than the OBSS_PD (step S915: No), the wireless communication device determines that the medium is in a busy state, and sets the SR transmission flag to be off (step S917). After step S913, S916, or S917, the wireless communication device ends the spatial reuse determination process.

FIG. 14 is a sequence diagram depicting one example of operation of a communication system according to the first embodiment of the present technique. At timing T1 after exchange of the statistical power information 131, the base station 101 in the BSS 501 starts transmission of a signal to the wireless terminal 201 (step S951).

After timing 11, the base station 102 in the adjacent BSS 502 performs carrier sensing, and detects, as an OBSS signal, the signal being transmitted by the base station 101. Since the signal intensity of the OBSS signal is equal to or less than the OBSS_PD, the base station 102 determines that the medium is in an idle state, and starts transmission of an SR signal addressed to the wireless terminal 202, at timing T2 at which a back-off time period has passed (step S952).

Here, the reception station of the SR signal is the wireless terminal 202, and the transmission station of the OBSS signal which interferes with the SR signal is the base station 101. Thus, the interference source for the reception station is the base station 101. Therefore, at step S952, the base station 102 first acquires the interference power average value of an interference signal from the base station 101 (interference source) to the wireless terminal 202 (reception station) by referring to the interference power information 132. Further, the base station 102 acquires the reception power average value of an SR signal from the base station 102 (transmission station) to the wireless terminal 202 (reception station) by referring to the reception power information 133. Subsequently, the base station 102 calculates an SINR as an SINRa by using the aforementioned expression 1, and acquires, as an MCSa, an MCS corresponding to the SINRa from the MCS setting table 134.

After transmission of the OBSS signal ends, an external device (e.g., the wireless terminal 201 or 203) excluding the base station 101 becomes an interference source to the wireless terminal 202. Therefore, at step S952, the base station 102 acquires the maximum value of the interference power average values of interference signals from interference sources excluding the base station 101 to the wireless terminal 202 by referring to the interference power information 132. Subsequently, the base station 102 calculates an SINR as an SINRb by using the aforementioned expression 1, and acquires, as an MCSb, an MCS corresponding to the SINRb from the MCS setting table 134. In the case where the SINRb is less than the SINRa, the index for the MCSb is less than that for the MCSa. On the other hand, in the case where the SINRb is greater than the SINRa, the index for the MCSb is greater than that for the MCSa.

Further, at step S952, the base station 102 calculates "MCSa Length" by using the following expression. In the expression, the value of "MCSa Length" is represented by "MCSa_Length."

$$\mathtt{MCSa\_Length \ = \ (T3 \ - \ T2 \ - \ Lp)/Lo \ \dots \ Expression \ 2}$$

In the expression, T2 represents a transmission starting timing of the aforementioned SR signal. T3 represents a timing at which transmission of the OBSS signal ends. Lp represents the length of a preamble of the SR signal. Lo represents the length of OFDM symbols. An integer value is set for "MCSa Length." Thus, when a fraction is generated by the division at the right side, predetermined processing of fractions such as rounding off or omitting fractions is performed.

Further, the base station 102 calculates "MCSb Length" by using the following expression. In this expression, the value of "MCSb Length" is represented by "MCSb_Length."

$$\mathtt{MCSb\_Length \ = \ (L-LENGTH) \ - \ (MCSa\_Length \ + \ Lp)}$$

Subsequently, the base station 102 sequentially transmits a preamble, and symbols the number of which is equal to "MCSa Length," by the MCSa. Next, the base station 102 changes the MCS to the MCSb, and sequentially transmits symbols the number of which is equal to that of "MCSb Length." The wireless terminal 202 receives SR signals by the MCSa and the MCSb. Note that the base station 102 is one example of the transmission device set forth in the claims. The wireless terminal 202 is one example of the reception device set forth in the claims.

The change timing at which the base station 102 changes the MCSa to the MCSb, substantially matches timing T3 at which transmission of the OBSS signal ends. Here, the wording the change timing "substantially matches" means that the change timing matches timing T3 or the difference between the change timing and timing T3 is equal to or less than a predetermined time (e.g., Lo). For example, in FIG. 14, the MCS is changed immediately before timing T3. Note that a timing immediately after timing T3 may be set as the MCS change timing, due to processing of fractions in expression 2.

After timing T3, the wireless terminal 201 in the BSS 501 external to the wireless terminal 202 transmits an ACK signal for reporting the reception success to the base station 101 (step S953). The ACK signal may interfere with the SR signal to be received by the wireless terminal 202. However, the ACK signal is transmitted by the MCSb that has been set on the assumption that the interference power is maximum, whereby collision between signals caused by interferences can be suppressed.

Further, after timing T3, the wireless terminal 203 in the BSS 501 external to the wireless terminal 202 performs carrier sensing. In the case where the signal intensity of the SR signal from the base station 102 is equal to or less than the CCA_SD in the carrier sensing, the wireless terminal 203 determines that the medium is in an idle state, and transmits a signal after the back-off time period passes (step S954). The signal (OBSS signal) also may interfere with the SR signal to be received by the wireless terminal 202. However, the SR signal is transmitted by the MCSb that has been set on the assumption that the interference power is maximum, whereby collision between signals caused by interferences can be suppressed.

Note that a wireless communication device such as the base station 101 is configured to set an MCSb on the basis of the maximum value of interference power, but is not limited to this configuration. For example, the wireless communication device may set, as an MCSb, an MCS having an index which is a fixed value (for example, "0") that provides the highest interference resistance, irrespective of the maximum value of interference power. In this case, the wireless communication device does not need to calculate an SINR when setting the MCSb although the throughput is deteriorated.

Moreover, a wireless communication device is configured to set an MCSb on the basis of the maximum value of interference power. However, in the case where the number of times of transmission successes by the MCSb is greater than a predetermined number of times, next or later transmission may be performed with the index of the MCSb set to be greater.

FIG. 15 is a sequence diagram depicting one example of operation of a communication system according to a modification in which an MCS is not changed. At timing T1, the base station 101 in the BSS 501 starts transmission of a signal to the wireless terminal 201 (step S961).

After timing T1, the base station 102 in the BSS 502 performs carrier sensing, and starts, at timing T2, transmission of an SR signal addressed to the wireless terminal 202 because the signal intensity of an OBSS signal is equal to or less than the OBSS_SD (step S962). An MCS for the SR signal is set as an MCSa, and is not changed during transmission of the SR signal.

After timing T3 at which transmission of the OBSS signal ends, the wireless terminal 201 in the BSS 501 transmits an ACK signal for reporting the reception success to the base station 101 (step S963).

Here, the value of the MCSa is set on the assumption that the base station 101 is an interference source. However, after timing T3, the wireless terminal 201 rather than the base station 101 becomes an interference source. Therefore, the interference power of an interference signal which is received by the wireless terminal 202 after timing T3 is not necessarily equal to that before timing T3. For example, in the case where the interference power is increased after timing T3, the interference resistance is insufficient with the MCSa, so that the possibility of collision between the ACK signal and the SR signal is increased.

Further, after timing T3, the wireless terminal 203 in the BSS 501 performs carrier sensing. Since the preamble of the signal from the base station 102 has been transmitted at this point, the wireless terminal 203 cannot determine whether or not the received signal is an OBSS signal. Therefore, the wireless terminal 203 determines that the medium is in an idle state when the signal intensity is equal to or less than the CCA_SD, and transmits a non-SR signal with transmission power set to a default value (step S964). Since the non-SR signal is an OBSS signal to the wireless terminal 202, the non-SR signal may interfere with an SR signal to be received by the wireless terminal 202. Since the non-SR signal is transmitted with power set to the default value without adjustment of transmission power, a more serious problem is caused, compared to the case of an ACK signal.

In contrast, in the communication system depicted in FIG. 14, the base station 102 changes the MCSa to the MCSb immediately before timing T3. The MCSb is set to a value on the assumption that the interference power is maximum, and thus, provides sufficiently high interference resistance. Thus, any collision between signals (in other words, any trouble caused by radio-wave interferences) can be suppressed.

As explained so far, the base station 101 changes the MCS when transmission of the interference signal ends in the first embodiment of the present technique. Thus, when the post-change MCS is set so as to provide high interference resistance, the interference resistance can be made high irrespective of a change in the interference power after the end of transmission of the interference signal. Accordingly, any trouble caused by radio-wave interferences can be suppressed.

<2. Second Embodiment>

In the aforementioned first embodiment, a wireless communication device such as the base station 101 writes an MCSa and an MCSb in a preamble of an SR signal. However, an MCSb may be written outside a preamble. A wireless communication device according to the second embodiment is different from that of the first embodiment in that the wireless communication device transmits an SR signal in which an MCSb is written outside a preamble.

FIG. 16 is a diagram depicting one example of the data structure of an SR signal according to the second embodiment of the present technique. An SR signal according to the second embodiment includes a preamble, two PSDUs (PLCP Service Data Units), and an HE-SIG field inserted between the PSDUs. An MCSa and "PSDU Length" which is the length of PSDUs to be transmitted by the MCSa are written in the preamble. That is, the data structure of the preamble is similar to a common IEEE802.11ax standard preamble. Also, an MCSb and "PSDU Length" of PSDUs to be transmitted by the MCSb are written in the HE-SIG field. Note that the number of PSDUs is not limited to two, and may be three or greater.

The preamble and the first PSDU are transmitted by the MCSa. In order to guarantee reception success, the HE-SIG field is transmitted by an MCSmin which is an MCS having the minimum index (e.g., "0"). The second PSDU is transmitted by the MCSb.

As explained so far, in the second embodiment of the present technique, the base station 101 transmits the SR signal in which the MCSb is written outside the preamble. Thus, it is sufficient to write only the MCSa in the preamble, whereby a data structure that is common in the standard can be used.

Note that the aforementioned embodiments each exemplify one example for embodying the present technique, and the features of the embodiments have a correspondence with the invention-specifying features of the claims. Similarly, the invention-specifying features of the claims have a correspondence with components, of the embodiments, referred to as the same names.

In addition, the process steps having been described in the aforementioned embodiments may be regarded as a method including a series of the steps, or may be regarded as a program for causing a computer to execute a series of the steps or as a recording medium having the program stored therein. As such a recording medium, a CD (Compact Disc), an MD (MiniDisc), a DVD (Digital Versatile Disk), a memory card, a Blu-ray (registered trademark) Disc, or the like may be used, for example.

Note that the effects described in the present description are just examples, and thus, are not limited. In addition, another effect may be exhibited.

[Reference Signs List]

101, 102 Base station
110 Communication section
120 Control section
130 Storage section
131 Statistical power information
132 Interference power information
133 Reception power information
134 MCS setting table
201, 202, 203 Wireless terminal

**Claims**

1. A wireless communication device (101, 102, 201, 202, 203) comprising:

   a control section (120) that, in a case of detecting an interference signal which interferes with a wireless signal, sets a pre-change modulation and coding scheme on a basis of a signal to interference plus noise ratio that is obtained from an interference power of the interference signal,
   estimates a maximum value of an interference power of a plurality of interference sources after passage of a timing at which transmission of the interference signal ends, and
   sets a post-change modulation and coding scheme on a basis of a signal to interference plus noise ratio that is obtained from the estimated maximum value of the interference power; and
   a communication section (110) that starts transmission of the wireless signal, to be received by a reception device, with the pre-change modulation and coding scheme, and continues the transmission of the wireless signal, to be received by the reception device, by changing the pre-change modulation and coding scheme to the post-change modulation and coding scheme after passage of the change timing.

2. The wireless communication device according to claim 1, wherein
   the communication section transmits the wireless signal including a preamble in which the pre-change modulation and coding scheme, and a length of a signal to be transmitted by the pre-change modulation and coding scheme are written.

3. The wireless communication device according to claim 2, wherein
   the post-change modulation and coding scheme is further written in the preamble.

4. The wireless communication device according to claim, wherein

the wireless signal further includes a plurality of PSDUs, PLCP Service Data Units, and a predetermined field inserted between the plurality of PSDUs, and
the post-change modulation and coding scheme is written in the predetermined field.

5. The wireless communication device according to claim 1, wherein

the wireless signal includes a predetermined number of symbols, and
the communication section performs coding and modulation in units of the symbols by the coding and modulation scheme.

6. The wireless communication device according to claim 5, wherein
the control section obtains the change timing from a transmission start timing of the wireless signal, the timing at which transmission of the interference signal ends, and a length of the symbols.

7. The wireless communication device according to claim 1, wherein
the communication section transmits the wireless signal including an index that is allocated to the modulation and coding scheme.

8. The wireless communication device according to claim 7, wherein
the index is written in an MCS, Modulation and Coding Scheme, field according to an IEEE802.11ax standard.

9. A communication system comprising:

a transmission device (101, 102, 201, 202, 203) that, in a case of detecting an interference signal which interferes with a wireless signal, sets a pre-change modulation and coding scheme on a basis of a signal to interference plus noise ratio that is obtained from an interference power of the interference signal, estimates a maximum value of an interference power of a plurality of interference sources after passage of a timing at which transmission of the interference signal ends, sets a post-change modulation and coding scheme on a basis of a signal to interference plus noise ratio that is obtained from the estimated maximum value of the interference power, starts transmission of the wireless signal by the pre-change modulation and coding scheme, and continues the transmission of the wireless signal by changing the pre-change modulation and coding scheme to the post-change modulation and coding scheme after passage of the change timing; and
a reception device (101, 102, 201, 202, 203) that starts reception of the wireless signal by the pre-change modulation and coding scheme, and continues the reception of the wireless signal by changing the pre-change modulation and coding scheme to the post-change modulation and coding scheme after passage of the change timing.

10. A communication method comprising:

A control step of, in a case of detecting an interference signal which interferes with a wireless signal, setting a pre-change modulation and coding scheme on a basis of a signal to interference plus noise ratio that is obtained from an interference power of the interference signal, estimating a maximum value of an interference power of a plurality of interference sources after passage of a timing at which transmission of the interference signal ends, setting a post-change modulation and coding scheme on a basis of a signal to interference plus noise ratio that is obtained from the estimated maximum value of the interference power;
a communication step of starting transmission of the wireless signal, to be received by a reception device, with the set pre-change modulation and coding scheme, and continuing the transmission of the wireless signal, to be received by the reception device, by changing the pre-change modulation and coding scheme to the post-change modulation and coding scheme after passage of the change timing.

**Patentansprüche**

1. Funkkommunikationsvorrichtung (101, 102, 201, 202, 203), umfassend:

einen Steuerabschnitt (120), der in einem Fall des Erkennens eines Interferenzsignals, das ein Funksignal stört,

ein Modulations- und Kodierungsschema vor der Änderung auf der Grundlage eines Signal-zu-Interferenz-plus-Rauschen-Verhältnisses einstellt, das sich aus einer Interferenzleistung des Interferenzsignals ergibt, einen Maximalwert einer Interferenzleistung einer Mehrzahl von Interferenzquellen nach Durchlauf einer Zeitspanne schätzt, zu der die Übertragung des Interferenzsignals endet, und ein Modulations- und Kodierungsschema nach der Änderung auf der Grundlage eines Signal-zu-Interferenzplus-Rauschen-Verhältnisses einstellt, das aus dem geschätzten Maximalwert der Interferenzleistung erhalten wird; und einen Kommunikationsabschnitt (110), der die Übertragung des Funksignals, das von einer Empfangsvorrichtung empfangen werden soll, mit dem -Modulations- und - Kodierungsschema vor der Änderung beginnt und die Übertragung des Funksignals, das von der Empfangsvorrichtung empfangen werden soll, fortsetzt, indem er das Modulations- und Kodierungsschema vor der Änderung in das Modulations- und Kodierungsschema nach der Änderung nach dem Durchlauf der Änderungszeit ändert.

2. Funkkommunikationsvorrichtung nach Anspruch 1, wobei der Kommunikationsabschnitt das Funksignal überträgt, das eine Präambel beinhaltet, in der das Modulations- und -Kodierungsschema vor der Änderung und eine Länge eines durch das Modulations- und -Kodierungsschema vor der Änderung zu übertragenden Signals geschrieben sind.

3. Funkkommunikationsvorrichtung nach Anspruch 2, wobei das Modulations- und Kodierungsschema nach der Änderung ferner in der Präambel geschrieben wird.

4. Funkkommunikationsvorrichtung nach Anspruch 2, wobei das Funksignal ferner eine Mehrzahl von PSDUs, PLCP-Dienstdateneinheiten und ein vorbestimmtes Feld beinhaltet, das zwischen der Mehrzahl von PSDUs eingefügt ist, und das Modulations- und Kodierungsschema nach der Änderung in das vorbestimmte Feld geschrieben wird.

5. Funkkommunikationsvorrichtung nach Anspruch 1, wobei das Funksignal eine vorbestimmte Anzahl von Symbolen beinhaltet, und der Kommunikationsabschnitt das Kodieren und Modulieren in Einheiten der Symbole nach dem Kodier- und Modulationsschema durchführt.

6. Funkkommunikationsvorrichtung nach Anspruch 5, wobei der Steuerabschnitt den Änderungszeitpunkt aus einem Übertragungsstartzeitpunkt des Funksignals, dem Zeitpunkt, an dem die Übertragung des Interferenzsignals endet, und einer Länge der Symbole erhält.

7. Funkkommunikationsvorrichtung nach Anspruch 1, wobei der Kommunikationsabschnitt das Funksignal überträgt, das einen Index beinhaltet, der dem Modulations- und Kodierungsschema zugewiesen ist.

8. Funkkommunikationsvorrichtung nach Anspruch 7, wobei der Index in ein Feld MCS, Modulations- und Kodierungsschema, gemäß dem Standard IEEE802.11ax geschrieben wird.

9. Kommunikationssystem, umfassend:

eine Übertragungsvorrichtung (101, 102, 201, 202, 203), die in einem Fall des Erkennens eines Interferenzsignals, das ein Funksignal stört, ein Modulations- und - Kodierungsschema vor der Änderung auf der Grundlage eines Signal-zu-Interferenz-plus-Rauschen-Verhältnisses einstellt, das aus einer Interferenzleistung des Interferenzsignals erhalten wird, einen Maximalwert einer Interferenzleistung einer Mehrzahl von Interferenzquellen nach dem Durchlauf einer Zeitspanne schätzt, bei der die Übertragung des Interferenzsignals endet, ein Modulations- und -Kodierungsschema nach der Änderung auf der Grundlage eines Signal-zu-Interferenz-plus-Rauschen-Verhältnisses einstellt, das aus dem geschätzten Maximalwert der Interferenzleistung erhalten wird, die Übertragung des Funksignals durch Modulations- und -Kodierungsschema vor der Änderung beginnt und die Übertragung des Funksignals fortsetzt, indem das Modulations- und -Kodierungsschema vor der Änderung in das Modulations- und -Kodierungsschema nach der Änderung nach dem Durchlaufen der Änderungszeit verändert wird; und eine Empfangsvorrichtung (101, 102, 201, 202, 203), die den Empfang des Funksignals mit dem Modulations- und Kodierungsschema vor der Änderung beginnt und den Empfang des Funksignals fortsetzt, indem sie das Modulations- und Kodierungsschema vor der Änderung in das Modulations- und Kodierungsschema nach der Änderung nach dem Durchlaufen der Änderungszeit ändert.

10. Kommunikationsverfahren, umfassend:

einen Steuerschritt zum Einstellen eines Modulations- und Kodierungsschemas vor dem Ändern auf der Grundlage eines Signal-zu-Interferenz-plus-Rauschen-Verhältnisses, das aus einer Interferenzleistung des Interferenzsignals erhalten wird, in einem Fall des Erkennens eines Interferenzsignals, das ein Funksignal stört, zum Schätzen eines Maximalwerts einer Interferenzleistung einer Mehrzahl von Interferenzquellen nach dem Durchlauf einer Zeitspanne, zu der die Übertragung des Interferenzsignals endet, zum Einstellen eines Modulations- und Kodierungsschemas nach dem Ändern auf der Grundlage eines Signal-zu-Interferenz-plus-Rauschen-Verhältnisses, das aus dem geschätzten Maximalwert der Interferenzleistung erhalten wird;
einen Kommunikationsschritt zum Starten der Übertragung des Funksignals, das von einer Empfangsvorrichtung empfangen werden soll, mit dem Modulations- und - Kodierungsschema vor der Änderung beginnt und Fortsetzen der Übertragung des Funksignals, das von der Empfangsvorrichtung empfangen werden soll, indem er das Modulations- und Kodierungsschema vor der Änderung in das Modulations- und Kodierungsschema nach der Änderung nach dem Durchlauf der Änderungszeit ändert.

## Revendications

1. Dispositif de communication sans fil (101, 102, 201, 202, 203) comprenant :

une section de commande (120) qui, en cas de détection d'un signal d'interférence qui interfère avec un signal sans fil,
définit un schéma de modulation et de codage avant changement sur la base d'un rapport signal/interférence plus bruit obtenu à partir d'une puissance d'interférence du signal d'interférence,
estime une valeur maximale d'une puissance d'interférence d'une pluralité de sources d'interférence après le passage d'un temps où la transmission du signal d'interférence prend fin, et
définit un schéma de modulation et de codage après changement sur la base d'un rapport signal/interférence plus bruit obtenu à partir de la valeur maximale estimée de la puissance d'interférence ; et
une section de communication (110) qui commence la transmission du signal sans fil, devant être reçu par un dispositif de réception, avec le schéma de modulation et de codage avant changement, et poursuit la transmission du signal sans fil, devant être reçu par le dispositif de réception, en remplaçant le schéma de modulation et de codage avant changement par le schéma de modulation et de codage après changement, après le passage du temps de changement.

2. Dispositif de communication sans fil selon la revendication 1, dans lequel :
la section de communication transmet le signal sans fil comprenant un préambule dans lequel le schéma de modulation et de codage avant changement et la longueur d'un signal à transmettre par le schéma de modulation et de codage avant changement sont écrits.

3. Dispositif de communication sans fil selon la revendication 2, dans lequel :
le schéma de modulation et de codage après changement est également écrit dans le préambule.

4. Dispositif de communication sans fil selon la revendication 2, dans lequel :

le signal sans fil comprend en outre une pluralité d'unités de données de service PLCP, PSDU, et un champ prédéterminé inséré entre la pluralité de PSDU, et
le schéma de modulation et de codage après changement est écrit dans le champ prédéterminé.

5. Dispositif de communication sans fil selon la revendication 1, dans lequel :

le signal sans fil comprend un nombre prédéterminé de symboles, et
la section de communication effectue le codage et la modulation dans les unités des symboles par le schéma de codage et de modulation.

6. Dispositif de communication sans fil selon la revendication 5, dans lequel :

la section de commande obtient le temps de changement à partir du temps de début de transmission du signal sans fil, du temps de fin de transmission du signal d'interférence et de la longueur des symboles.

7. Dispositif de communication sans fil selon la revendication 1, dans lequel :
la section de communication transmet le signal sans fil comprenant un index attribué au schéma de modulation et de codage.

8. Dispositif de communication sans fil selon la revendication 7, dans lequel :
l'index est écrit dans un champ de schéma de modulation et de codage, MCS, conformément à la norme IEEE802.11ax.

9. Système de communication comprenant :

un dispositif de transmission (101, 102, 201, 202, 203) qui, en cas de détection d'un signal d'interférence qui interfère avec un signal sans fil, définit un schéma de modulation et de codage avant changement sur la base d'un rapport signal/interférence plus bruit obtenu à partir d'une puissance d'interférence du signal d'interférence, estime une valeur maximale d'une puissance d'interférence d'une pluralité de sources d'interférence après le passage d'un temps où la transmission du signal d'interférence prend fin, définit un schéma de modulation et de codage après changement sur la base d'un rapport signal/interférence plus bruit obtenu à partir de la valeur maximale estimée de la puissance d'interférence, commence la transmission du signal sans fil avec le schéma de modulation et de codage avant changement, et poursuit la transmission du signal sans fil en remplaçant le schéma de modulation et de codage avant changement par le schéma de modulation et de codage après changement, après le passage du temps de changement ; et
un dispositif de réception (101, 102, 201, 202, 203) qui commence la réception du signal sans fil avec le schéma de modulation et de codage avant changement, et continue la réception du signal sans fil en remplaçant le schéma de modulation et de codage avant changement par le schéma de modulation et de codage après changement après le passage du temps de changement.

10. Procédé de communication comprenant :
une étape de commande comprenant les étapes suivantes :

en cas de détection d'un signal d'interférence qui interfère avec un signal sans fil, définir un schéma de modulation et de codage avant changement sur la base d'un rapport signal/interférence plus bruit obtenu à partir d'une puissance d'interférence du signal d'interférence, estimer une valeur maximale d'une puissance d'interférence d'une pluralité de sources d'interférence après le passage d'un temps où la transmission du signal d'interférence prend fin, définir un schéma de modulation et de codage après changement sur la base d'un rapport signal/interférence plus bruit obtenu à partir de la valeur maximale estimée de la puissance d'interférence ;
une étape de communication comprenant de commencer la transmission du signal sans fil, qui doit être reçu par un dispositif de réception, avec le schéma de modulation et de codage avant changement défini, et de poursuivre la transmission du signal sans fil, qui doit être reçu par le dispositif de réception, en remplaçant le schéma de modulation et de codage avant changement par le schéma de modulation et de codage après changement, après le passage du temps de changement.

# FIG.1

# FIG.2

# FIG.3

BASE STATION                                                              101

STORAGE SECTION    131                          130                110

STATISTICAL POWER
INFORMATION        132

INTERFERENCE
POWER
INFORMATION

133
RECEPTION
POWER
INFORMATION

COMMUNICATION
SECTION

134
MCS SETTING
TABLE

120
CONTROL
SECTION

# F I G . 4

132

| RECEPTION STATION | INTERFERENCE SOURCE | INTERFERENCE POWER AVERAGE VALUE |
|---|---|---|
| MAC ADDRESS Ar3 | MAC ADDRESS Ai31 | Wi31 |
| | MAC ADDRESS Ai32 | Wi32 |
| | ⋮ | ⋮ |
| | MAC ADDRESS Ai3N | Wi3N |
| MAC ADDRESS Ar4 | MAC ADDRESS Ai41 | Wi41 |
| | MAC ADDRESS Ai42 | Wi42 |
| | ⋮ | ⋮ |
| ⋮ | ⋮ | ⋮ |

# FIG.5

133

| RECEPTION STATION | TRANSMISSION STATION | RECEPTION POWER AVERAGE VALUE |
|---|---|---|
| MAC ADDRESS Ar1 (BASE STATION) | MAC ADDRESS At11 (WIRELESS TERMINAL) | Wr11 |
| | MAC ADDRESS At12 (WIRELESS TERMINAL) | Wr12 |
| | . . . | . . . |
| | MAC ADDRESS At1N (WIRELESS TERMINAL) | Wr1N |
| MAC ADDRESS Ar2 (WIRELESS TERMINAL) | MAC ADDRESS At2 (BASE STATION) | Wr2 |
| . . . | . . . | . . . |

FIG.6

134

| SINR | MCS INDEX (MODULATION SCHEME, CODING RATE) |
|---|---|
| LESS THAN Rth1 | 0 (BPSK、1/2) |
| EQUAL TO OR GREATER THAN Rth1 BUT LESS THAN Rth2 | 1 (QPSK、1/2) |
| EQUAL TO OR GREATER THAN Rth2 BUT LESS THAN Rth3 | 2 (QPSK、3/4) |
| ⋮ | ⋮ |

SMALL SINR

LARGE SINR

LOW THROUGHPUT (HIGH INTERFERENCE RESISTANCE)

HIGH THROUGHPUT (LOW INTERFERENCE RESISTANCE)

# FIG.7

| OBSS SIGNAL |
|---|

| PREAMBLE | DATA |
|---|---|

| OFDM SYMBOL | OFDM SYMBOL | ... | OFDM SYMBOL |
|---|---|---|---|

# FIG.8

| L-STF | L-LTF | L-SIG | RL-SIG | HE-SIG-A | HE-SIG-B | HE-STF | HE-LTF |
|---|---|---|---|---|---|---|---|

LEGACY PREAMBLE        HE-PREAMBLE

# FIG.9

| L-STF | L-LTF | L-SIG | RL-SIG | HE-SIG-A | HE-SIG-B | HE-STF | HE-LTF |
|-------|-------|-------|--------|----------|----------|--------|--------|

| FIELD | EXPLANATION |
|-------|-------------|
| L_RATE | TRANSFER RATE (Mbps) |
| L_LENGTH | PACKET LENGTH |

24

# FIG.10

| L-STF | L-LTF | L-SIG | RL-SIG | HE-SIG-A | HE-SIG-B | HE-STF | HE-LTF |
|-------|-------|-------|--------|----------|----------|--------|--------|

| FIELD | EXPLANATION |
|-------|-------------|
| DL/UL | DIRECTION OF LINK (DOWNLINK/UPLINK) |
| Format | PPDU FORMAT (SU PPDU/Trigger-based UL PPDU) |
| BSS Color | BSS IDENTIFIER |
| Spatial Reuse | SPATIAL REUSE INFORMATION |
| TXOP Duration | REMAINING TIME OF CHANNEL OCCUPATION TIME PERIOD |
| Bandwidth | BANDWIDTH |
| MCS | MODULATION AND CODING SCHEME |
| CP+LTF Size | SIZE OF CP (Cyclic Prefix) AND LTF (Long Training Field) |
| Coding | CODING RATE |
| Nsts | NUMBER OF sts (SPATIOTEMPORAL STREAMS) |
| STBC | WHETHER OR NOT STBC (SPATIOTEMPORAL BLOCK CODING) HAS BEEN PERFORMED |
| TxBF | WHETHER OR NOT TxBF (TRANSMISSION BEAM FORMING) HAS BEEN PERFORMED |
| DCM | WHETHER OR NOT DCM (Dual Carrier Modulation) HAS BEEN PERFORMED |
| Packet Extension | EXTENSION OF PACKET |
| Beam Change | WHETHER OR NOT PRE-DECODER BETWEEN L-LTF AND HE-LTF HAS BEEN CHANGED |
| Doppler | PRESENCE/ABSENCE OF DOPPLER RESISTANCE |

# FIG.11

| SR SIGNAL |
|---|
| |

| PREAMBLE | DATA |
|---|---|

| L-STF | L-LTF | L-SIG | RL-SIG | HE-SIG-A | HE-SIG-B | HE-STF | HE-LTF |
|---|---|---|---|---|---|---|---|

| FIELD | EXPLANATION |
|---|---|
| DL／UL | DIRECTION OF LINK (DOWNLINK/UPLINK) |
| Format | PPDU FORMAT (SU PPDU/Trigger-based UL PPDU) |
| BSS Color | BSS IDENTIFIER |
| ⋮ | ⋮ |
| MCSa | PRE-CHANGE MCS |
| MCSa Length | LENGTH OF SIGNAL (EXCLUDING PREAMBLE) WHICH IS TRANSMITTED BY MCSa |
| MCSb | POST-CHANGE MCS |
| MCSb Length | LENGTH OF SIGNAL WHICH IS TRANSMITTED BY MCSb |
| ⋮ | ⋮ |

# FIG.12

```
        ┌──────────┐
        │  START   │
        └──────────┘
              │
              ▼
    ┌─────────────────────┐  S901
    │ ACQUIRE STATISTICAL │
    │  POWER INFORMATION  │
    └─────────────────────┘
              │
              ▼
    ┌─────────────────────┐  S910
    │    SPATIAL REUSE    │
    │ DETERMINATION PROCESS│
    └─────────────────────┘
              │
              ▼
           ◇ S902
      IS SR               No
   TRANSMISSION FLAG  ──────►
        ON?
           │ Yes
           ▼
  ┌──────────────────────────┐  S903
  │ CALCULATE SINRa FROM     │
  │ INTERFERENCE POWER OF    │
  │ OBSS SIGNAL              │
  └──────────────────────────┘
           │
           ▼
    ┌─────────────────┐  S904
    │   SET MCSa ON   │
    │ BASIS OF SINRa  │
    └─────────────────┘
           │
           ▼
  ┌──────────────────────────┐  S905
  │   CALCULATE SINRb FROM   │
  │ MAXIMUM INTERFERENCE POWER│
  └──────────────────────────┘
           │
           ▼
    ┌─────────────────┐  S906
    │   SET MCSb ON   │
    │ BASIS OF SINRb  │
    └─────────────────┘
           │
           ▼
    ┌─────────────────┐  S907
    │   PERFORM SR    │
    │  TRANSMISSION   │
    └─────────────────┘
```

# FIG.13

S910

START SPATIAL REUSE
DETERMINATION PROCESS

S911
PERFORM CARRIER SENSE

S912
SIGNAL INTENSITY
> CCA_SD?

No

Yes

S913
DETERMINE IDLE STATE, AND SET
SR TRANSMISSION FLAG TO BE OFF

S914
DOES BSS Color
INDICATE EXTERNAL
BSS?

No

Yes

S915
SIGNAL INTENSITY
≤ OBSS_PD?

No

Yes

S916
DETERMINE IDLE STATE, AND SET
SR TRANSMISSION FLAG TO BE ON

S917
DETERMINE BUSY STATE, AND SET
SR TRANSMISSION FLAG TO BE OFF

END

28

# FIG.14

501    502    501

203 — WIRELESS TERMINAL

202 — WIRELESS TERMINAL

102 — BASE STATION

201 — WIRELESS TERMINAL

101 — BASE STATION

BUSY

BACK-OFF

BUSY

BACK-OFF

OBSS SIGNAL

S954

RECEPTION

PREAMBLE

S952

MCSa

SR SIGNAL

MCSb

...

T2

T1

PREAMBLE

RECEPTION

S951

DATA

OBSS SIGNAL

T3

ACK

S953

# FIG.15

# FIG.16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012207097 A1
- JP 2016195409 A